# EUROPEAN PATENT APPLICATION

(11) **EP 4 592 254 A1**
(43) Date of publication of application: **30.07.2025**
(21) Application number: 25153361.8
(22) Date of filing: 22.01.2025
(51) Int. Cl.: C02F 1/66, C02F 1/20, C02F 1/52, C02F 1/56, C02F 11/04, C02F 101/30

(54) **METHOD FOR TREATING WASTEWATER**

(30) Priority: 24.01.2024 IT 202400001350
(71) Applicant: SDG S.r.l., 36015 Schio (VI) (IT)
(72) Inventor: MARTINI, Giambattista, 36015 Schio (VI) (IT)
(74) Representative: Gallo, Luca

(57) **Abstract**

Method for treating waste water, comprising a step of collecting waste water (Vr) to be treated, comprising at least one organic pollutant compound (C), and a step of adding an alkaline reagent (Ra) into the waste water (Vr) in order to degrade the organic pollutant compound (C), and obtain alkaline waste water (Va). The alkaline reagent (Ra) comprises combustion ash from biomass combustion and/or a derivative of the aforesaid combustion ash, which contain at least one alkalizing compound.

In addition the method comprises a step of maturation of the alkaline waste water (Va), in which the modified molecules (MM) coagulate in order to obtain mature waste water (Vm) containing at least one flocculation (F), and a step of separation of the mature waste water (Vm) into at least clarified water (Vc) and sludge (Vf) mainly containing the flocculation (F).

In addition, the method comprises a step of neutralization in order to reduce the pH of the clarified water (Vc) and obtain neutral clarified water (Vcn).

## Description

### Field of application

The present invention regards a method for treating waste water according to the preamble of the independent claim 1.

The present method for treating waste water is advantageously intended to be used in the field of treatment and cleaning of water, or in the fields where it is necessary to treat waste water, for example the treatment of water coming from city dumps, from the food industry, from the hide tanning industry, from the paper industry, and from other processing that employs considerable quantities of water.

### State of the art

In the field of treatment and cleaning of waste water, in particular waste water containing at least one organic pollutant compound (in the jargon also termed "organic charge"), treatment methods are known which provide for using plants which are mainly divided into two categories: aerobic and anaerobic. In both cases, the methods of treatment by means of such plants have the objective of degrading the aforesaid organic pollutant compound contained in the waste water, i.e. transforming the chemical structure into a less complex one by means of oxidation in order to render it less harmful and/or simpler to separate. In this manner, such methods are aimed to reduce the quantity of the organic pollutant compound in the waste water in order to render the latter suitable for being used once again for various purposes, e.g. in agriculture, or to be released in the environment, e.g. in waterways or in the sea, without contaminations.

Generally, aerobic plants are aimed to treat waste water containing a low concentration of organic pollutant compounds, which is expressed in terms of COD (Chemical Oxygen Demand), i.e. as quantity of oxygen necessary for the complete chemical oxidation of the organic and inorganic compounds present in a water sample. For example, aerobic plants are aimed to treat waste water in which the pollutant compounds have a concentration in COD generally lower than 10000 ppm.

Otherwise, anaerobic plants are particularly suitable for treating waste water with high COD charge, e.g. greater than 10000 ppm.

Both types of plants employ conventional treatment methods, of chemical and/or biological type. In particular, the aerobic plants are typically divided into three sections, including a first section, comprising mechanical filters (e.g. membranes and/or tangential filters) and sedimenters, in particular primary sedimenters, in order to physically treat the waste water, so as to remove most of the solids suspended in the water. A subsequent second section comprises one or more tanks, in which the waste water is chemically treated, for example by adding one or more reagents in order to precipitate the salts contained in the water, and a sedimenter, in which the sedimentation occurs of solids (precipitated salts and other suspended solids), separated by gravity (or by filtration) from the rest of the water. Finally, in a third section, a biological treatment is executed in an aerobic reactor, in which aerobic bacteria reduce the organic charge contained in the water, metabolizing the carbon contained in the organic pollutant compounds dissolved and/or suspended in the waste water, and producing carbon dioxide, water and biomass.

Otherwise, the anaerobic plants comprise at least one anaerobic digestion section. More in detail, by anaerobic digestion, it is intended a process of degradation of at least one organic compound by microorganisms in anaerobic conditions. Such anaerobic digestion section comprises an anaerobic digester, which contains anaerobic bacteria, acting on the content of waste water in order to transform the latter into biogas, comprising at least carbon dioxide and methane, and a substantially liquid digestate.

In order to concentrate the pollutant charge, organic and/or inorganic, that cannot be easily sedimented, in order to send it to the digester it is also known to add an alkaline reagent to the waste water to be treated, in a manner such to cause the coagulation and flocculation of the pollutant charge, with its consequent precipitation. Generally, the alkaline reagent is a strong base, such as for example a hydroxide (usually of calcium), pure addition or in an aqueous solution, in order to obtain a pH up to a value close to 10, sufficient for making the coagulation take place.

The methods for treating waste water of known type described up to now have in practice shown that they do not lack drawbacks.

A first drawback lies in the fact that, if the flocculation is provided for by means of addition of an alkaline reagent, the latter is still not very effective for lowering the organic charge into a satisfactory quantity. In addition, the flocculation requires long residence times in the digesters in order to be removed.

A further drawback is given by the fact that the methods for treating waste water require a considerably quantity of chemical agents in order to ensure the elimination of most of the organic charge present in the waters to be treated, which have complex production processing and a high overall cost, in particular if used in pure form.

A further drawback is given by the fact that the plants for implementing such methods for treating waste water are often quite bulky. For example, just the aerobic digester in the aerobic plants generally requires a volume of about 500 cubic meters.

A further drawback is given by the fact that the methods for treating waste water described above are adapted for treating only one type of waste water, in particular based on the type and quantity of organic charge contained in the waste water itself.

### Presentation of the invention

In this situation, the problem underlying the present invention is therefore that of overcoming the drawbacks manifested by the abovementioned solutions of known type, by providing a method for cleaning waste water, which is capable of using chemical agents that are less costly and capable of decreasing the overall environmental impact.

Another object of the present invention is to provide a method for treating waste water, which allows a savings of chemical agents with respect to the waste water treatment plants of known type.

Another object of the present invention is to provide a method for treating waste water, which allows reducing the treatment times necessary for eliminating at least one organic pollutant compound from the aforesaid waste water.

Another object of the present invention is to provide a method for treating waste water, which is versatile, i.e. capable of treating waste water independent of the concentration of organic pollutant compounds contained therein.

Another object of the present invention is to provide a method for treating waste water, which is capable of reducing the pollutants present in the water to be treated in a manner such to not require further treatment downstream of the plant itself.

Another object of the present invention is to provide a method for treating waste water, which is capable of minimizing the occupied spaces on the ground and the emissions of carbon dioxide, nitrogen compounds and phosphorus with respect to the methods and the plants of known type.

### Brief description of the drawings

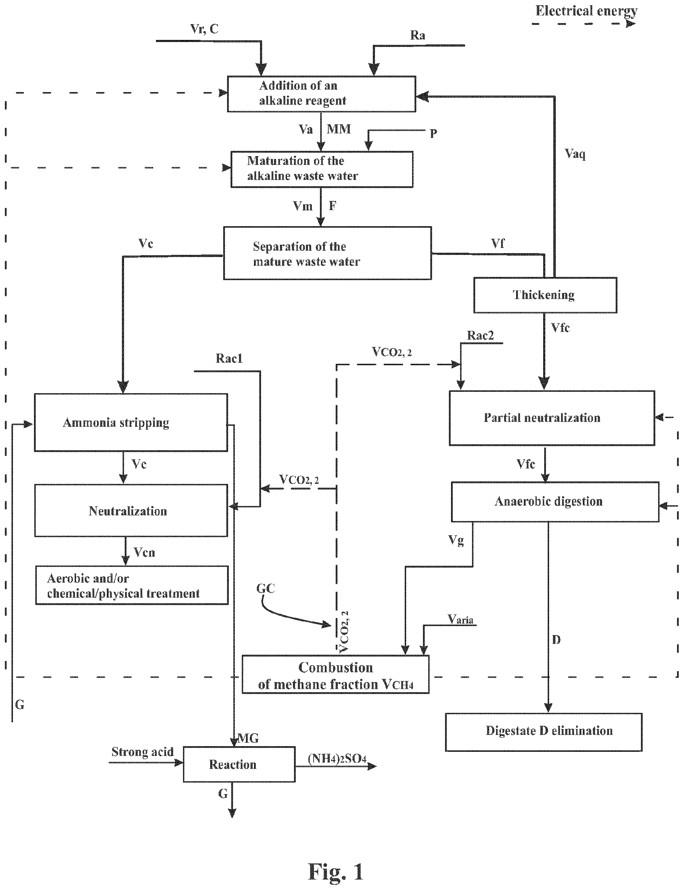

The technical characteristics of the invention, according to the aforesaid objects, are clearly seen in the below-reported contents of the claims and the advantages thereof will be more evident in the following detailed description, made with reference to the enclosed drawing, which represents a merely exemplifying and non-limiting embodiment, in which Figure 1 shows a schematic representation of the method for cleaning waste water according to a preferred embodiment of the present invention.

### Detailed description of a preferred embodiment

Forming the object of the present invention is a method for treating waste water, whose preferred embodiment is schematically illustrated in figure 1, which can be employed in a plant described for example in the Italian patent IT 102022000015627 or in the Italian patent IT 102023000003561. Of course, without departing from the protective scope of the present invention, such method can employ any other plant for treating waste water that is adapted for such purpose.

The method is advantageously intended to be used in sites for the treatment and cleaning of waste water of various type, in particular waste water deriving from city sewage dumps, or it can be employed also for treating waste water of various type and origin, for example deriving from the processing of animal hides, food or cellulose.

Hereinbelow, with the term waste water it will be intended an aqueous solution with content of suspended solids lower than 50000 mg/l, preferably lower than 20000 mg/l.

According to the idea underlying the present invention, the method comprises a step of providing waste water Vr to be treated, in which the waste water Vr comprise at least one organic pollutant compound C.

In particular, the organic pollutant compound C is any undesired organic molecule in the waste water Vr that must be treated in order to discharge them into the natural environment or reuse them within an industrial plant, from which the waste water Vr itself derives.

For example, the organic pollutant compound C is a protein, a starch, cellulose, a compound deriving from the process of food processing, in particular of meat, of fish or of the cheese-making industry, or from the paper making process, or an organic dye deriving from the tanning industry.

Of course without departing from the protective scope of the present invention, the organic pollutant compound C can be free in the waste water Vr or also contained in any unicellular element (bacteria and/or viruses) whose concentration in the waste water Vr to be treated is greater than the legal limits and is susceptible of being lowered by means of a method for the treatment thereof.

Advantageously, the present method allows sizing the plant in order to process a quantity of organic compound C equal to or greater than 6000 AE, i.e. equal to or greater than 1200 m³ per day. Indeed, it was surprising discovered that for such volumetric flow rates, the method allows for example producing sludge Vf, from which biogas Vg is produced in a quantity such to generate sufficient energy to self-sustain the plant, without having to employ fossil fuels.

The method according to the invention comprises a step of adding an alkaline reagent Ra into the waste water Vr in order to obtain alkaline waste water Va, in which the at least one organic pollutant compound C is transformed into modified molecules MM due to the alkaline reagent Ra. In particular, the modified molecules MM are hydrolyzed and/or denatured molecules. Advantageously, the pH of the alkaline waste water Va is comprised between 10 and 14, preferably between 11 and 14, more preferably between 11 and 13, still more preferably between 11.5 and 13, for example about 12.2.

Of course, the pH of the alkaline waste water Va is also variable based on the temperature of such waste water and is suitably higher if the temperature of the waste water Vr is lower and vice versa.

In accordance with the idea underlying the present invention, the alkaline reagent Ra comprises combustion ash from biomass combustion and/or a derivative of such combustion ash.

In particular, the combustion ash and/or the derivative of the combustion ash contain at least one alkalizing compound.

With the expression "alkalizing compound" it will be intended a compound, which in bathed form, i.e. in aqueous solution, reacts in order to form a hydrate that increases the alkalinity of the solution. Of course, without departing from the protective scope of the present invention, in the event in which the derivative of the ash is in liquid form, i.e. it is a solution, the alkalizing compound can also be present in dissociated and/or already hydrated form.

More in detail, so as to obtain such combustion ash, the method comprises a step of providing a biomass and a step of combustion of the biomass in order to produce at least thermal and/or electrical energy and the combustion ash. In particular, in the combustion combustion step, in a per se known manner, also at least one gaseous combustion product (water vapor and fumes) is produced.

With the term "biomass" it will be intended any material or organic origin (plant or animal) which has not undergone any process of fossilization and is used for producing energy. Therefore, all the fossil fuels (petroleum, coal, methane, etc..) will not be considered as biomass. Advantageously, therefore, the biomass comprises substances also of very different nature, characterized by an organic matrix and intended for energy purposes.

In particular, in accordance with a first classification based on the origin, the biomass can be a residual biomass or a non-residual biomass. More in detail, the residual biomass is biomass deriving from discards of a specific area of origin (from the farming field to the livestock field), while the non-residual biomass derives from suitable plant cultivations or energetic bacteria, such as for example an alcoholigenic culture (i.e. with high sugar content), an oleaginous culture or a lignocellulose culture.

In addition, in accordance with a second classification based on the type of organic material, the biomass can be a plant biomass, an animal biomass or a microbial biomass. More in detail, the plant residual biomass comes from the discards of farming, forestry or gardening activity, while the non-residual biomass comprises all the plants cultivated with the purpose of being used as biofuels. For example, plant biomass can in general comprise: marc, residues of oil production, shells, cores, pits, skins, branches, wood, etc.

Animal biomass advantageously comes from livestock farming. For example, the animal biomass comprises manure, containing at its interior gases, nutrients and chemical energy produced from the grass that the animals have eaten, and the animal carcasses.

Microbial biomass advantageously comes from the ground, from bacteria cultures or from sludge from aerobic and/or anaerobic digestion and comprises for example elements such as sulfur and nitrogen, or bacteria, fungi and microbes, for example derivatives from decomposition of animals and plants and rich with minerals.

Optionally, the biomass can also be moist city waste obtained from recycling processes.

Advantageously, the biomass used in the present method is a plant biomass, preferably of wood nature and preferably residual, in particular industrial and from the forest, for example coming from wood chips, bio-crushed wood and/or branches coming from pruning. Of course, it is also possible to use wood in logs, small logs and/or pellets.

Advantageously, the plant biomass of wood nature contains 99% by weight of cellulose, hemicellulose and lignin. In addition, the plant biomass of wood nature advantageously contains 1% by weight of components of mineral origin.

Advantageously, the step of combustion of the biomass, i.e. the energy conversion of the biomass by means of direct combustion, is executed in a per se known manner within apparatuses for thermal use, plants for producing electrical energy or cogeneration plants, which in particular simultaneously generate, in a single process, thermal and electrical energy and/or mechanical energy. In particular, in ideal conditions, the combustion steps occurs through complete oxidation reactions which lead to the development of heat and to the formation of water and carbon dioxide.

In accordance with the preferred embodiment of the present invention, the alkalizing compound in the combustion ash is at least one oxide containing an alkaline or alkaline earth metal selected from among: potassium, sodium, calcium and magnesium.

For example, an oxide containing potassium is potassium oxide (K₂O), an oxide containing sodium is sodium monoxide (Na₂O), an oxide containing calcium is calcium oxide (CaO) and an oxide containing magnesium is magnesium oxide (MgO).

**Table 1 - Chemical composition and pH of several types of combustion ash from biomass**

| **Parameters** | **Unit of measure** | **Bark ash** | **Wood chip ash** | **Saw dust ash** | **Hay ash** |
|---|---|---|---|---|---|
| pH | - | 12.7 | 12.8 | 12.5 | 11.2 |
| Residual organic content | | 0.8 | 1.3 | 5.9 | 5.2 |
| CO₂ | | 4 | 7.2 | 12.5 | 1 |
| P₂O₅ | | 1.7 | 3.6 | 2.5 | 2.7 |
| K₂O | | 5.1 | 6.7 | 7.1 | 11.5 |
| CaO | | 42.2 | 44.7 | 35.5 | 7.4 |
| MgO | % mass over total dry substance | 6.5 | 4.8 | 5.7 | 3.8 |
| Na₂O | | 0.8 | 0.6 | 0.5 | 0.3 |
| Al₂O₃ | | 7.1 | 4.6 | 2.3 | 1.2 |
| SiO₂ | | 26.0 | 25.0 | 25.0 | 54.0 |
| SO₃ | | 0.6 | 1.9 | 2.4 | 1.2 |
| Fe₂O₃ | | 3.5 | 2.3 | 3.7 | 1 |
| MnO | | 1.5 | 1.7 | 2.6 | 0.1 |
| Cu | | 87.8 | 126.8 | 177.8 | 23.2 |
| Zn | | 618.6 | 375.7 | 1429.8 | 234.6 |
| Co | | 23.9 | 15.3 | 16.7 | 1.5 |
| Mo | | 4.8 | 1.7 | 3.4 | 7.1 |
| As | mg/kg of total dry substance | 11.4 | 8.2 | 7.8 | 5.4 |
| Ni | | 94.1 | 61.5 | 71.9 | 3.9 |
| Cr | | 132.6 | 54.1 | 137.2 | 12.3 |
| Pb | | 25.3 | 25.4 | 35.6 | 7.7 |
| Cd | | 3.9 | 4.8 | 16.8 | 0.7 |
| V | | 58.4 | 42.0 | 26.7 | 5.5 |

Of course, without departing from the protective scope of the present invention, the combustion ash can contain other oxides and compounds, such as for example illustrated in Table 1, which reports several compositions of different types of combustion ash.

Advantageously, the oxide containing an alkaline or alkaline earth metal is present in the combustion ash in a quantity greater than 30% by mass with respect to the mass of dry substance of the combustion ash, preferably in a quantity greater than 35%, and still more preferably in a quantity greater than 40%.

Advantageously, the alkalizing compound comprises calcium oxide (CaO), which is preferably present in a quantity comprised between 20 and 50% by mass with respect to the mass of dry substance of the combustion ash, more preferably comprised between 30 and 50%, still more preferably comprised between 35 and 45%.

Advantageously, in addition, the alkalizing compound comprises magnesium oxide (MgO), which is preferably present in a quantity comprised between 2 and 8% by mass with respect to the mass of dry substance of the combustion ash, more preferably comprised between 3 and 7%, still more preferably comprised between 4 and 6%.

In accordance with the preferred embodiment, the combustion ash comprises multiple different alkalizing compounds, in particular multiple oxides containing different alkaline or alkaline-earth metals. Preferably, the sum of the oxides containing an alkaline or alkaline earth metal present in the combustion ash is in a quantity greater than 40% by mass with respect to the mass of dry substance of the combustion ash, preferably in a quantity greater than 45%, and still more preferably in a quantity greater than 50%.

For example, as is visible in Table 1, the combustion ash from bark, from wood chip or from saw dust are the best in terms of composition.

Of course, the mineral composition of the ash advantageously also depends on the type of biomass and in particular, in the case of plant biomass, on the type of plant used and on its life cycle.

Advantageously, the present method comprises a pulverization step, in which the combustion ash is ground in order to be reduced to grain sizes on the order of microns.

Advantageously, the present method comprises a maceration step, in which the combustion ash is immersed in an extracting liquid, preferably water, and maintained in the aforesaid extracting liquid for a pre-established leaching time in order to extract said alkalizing compound from the combustion ash and obtain an alkaline solution, containing at least part of alkalizing compound in solution, and a slag, containing combustion ash at least partially lacking said alkalizing compound.

Advantageously, the combustion ash is added to the extracting liquid in a quantity comprised between 10 and 50% by mass with respect to the sum of the combustion ash and of the extracting liquid, preferably between 15 and 45%, more preferably between 20 and 40%, still more preferably between 25 and 35%.

Advantageously, the leaching time is greater than 6 hours, preferably equal to or greater than 12 hours, more preferably equal to or greater than 24 hours, still more preferably equal to or greater than 48 hours. In particular, in order to obtain the complete or nearly complete disintegration and dispersion of the combustion ash in the extracting liquid, it is possible to extend the leaching time for various days or even weeks.

More in detail, in the maceration step, the oxide containing an alkaline or alkaline earth metal is transferred into the extracting liquid, obtaining the alkaline solution. Preferably, all the oxides containing an alkaline or alkaline earth metal are transferred entirely or partly into the extracting liquid.

Advantageously, in particular at the end of the maceration step, the alkalizing compound is present in the alkaline solution in a quantity comprised between 20 and 50% by mass with respect to the mass of the alkaline solution.

In particular, the leaching of the alkalizing compound occurs in accordance with the reaction (I) reported hereinbelow:

M₂CO₃ + 2 H₂O → 2 MOH + CO₂M₂CO₃ + 2 H₂O→ 2 MOH + CO₂ (I)

where M represents an alkaline metal such as sodium (Na) or potassium (K).

Advantageously, the maceration step can occur under cold or hot conditions.

In order to increase the quantity of alkalizing compound in the extracting liquid, i.e. in order to lead the combustion ash to exhaustion (maximum dissolution), it is possible to provide for multiple consecutive maceration steps.

For such purpose, the method comprises a step of further maceration, in which the slag obtained in the maceration step is separated from the alkaline solution and is introduced into a new extracting liquid. In this manner, the solubility of the alkalizing compounds of the slag in the new extracting liquid is lower than that in the alkaline solution and it is possible to continue the extraction. Optionally, such step of further maceration can be repeated cyclically multiple times, for example up to the total or near total exhaustion of the alkalizing compounds in the slag. Advantageously, in addition, the method advantageously comprises at least one secondary extraction step, subsequent to the maceration step or to the further maceration step, in which the slag is separated from the alkaline solution and a new combustion ash is added to the alkaline solution in order to be used as extracting liquid.

In accordance with the preferred embodiment of the present method, the maceration step is executed within a reactor under controlled atmosphere, substantially free of carbon dioxide.

In this manner, it is possible to prevent or obstruct the formation of carbonates which precipitate and decrease the alkalinity of the alkaline solution.

For example, the formation of the calcium and/or magnesium carbonates occurs approximately in accordance with the reactions (II) and (III) reported hereinbelow:

Ca²⁺ + CO₃²⁻ → CaCO₃↓ (II)

Mg²⁺ + CO₃²⁻ → MgCO₃↓ (III)

In addition, during the maceration step or afterwards, calcium and/or magnesium silicates may optionally be formed which are undesired, since they precipitate and contribute to lowering the alkalinity of the alkaline solution. For example, such silicates are approximately formed by means of the reactions (IV) and (V) reported hereinbelow with silicates present in the combustion ash:

Ca²⁺ + SiO₄⁴⁻ →CaSiO₃↓ (IV)

Mg²⁺ + SiO₄⁴⁻ → MgSiO₃↓ (V)

More in detail, the precipitated compounds, such as for example the carbonates and silicates mentioned above, come to be part of the slag, while the resulting alkaline solution is mainly enriched with sodium and potassium hydroxides.

Advantageously, the formation of slag during the maceration step is affected at least by the composition of the plant ash, by the leaching conditions and by the management of the process (e.g. temperature and/or pressure).

As anticipated above, for example executing the maceration in a closed reactor without carbon dioxide, monitoring and controlling the pH of the solution during the leaching process can affect the solubility of the compounds. In addition, advantageously maintaining a lower pH can help to prevent the formation of certain insoluble compounds which precipitate and come to make up part of the slag.

Of course, the optimal conditions in which the maceration step is executed advantageously depend on the composition of the ash.

Advantageously, the derivative of the combustion ash, in particular used as alkaline reagent Ra, comprises at least one part of alkaline solution. For example, the derivative of the combustion ash is constituted by the entire alkaline solution, or by a concentrated alkaline solution, or by a part of alkaline solution (or concentrated alkaline solution) and a part of slag.

Optionally, the method comprises a concentration step, in which a part of extracting liquid is removed from said alkaline solution in order to obtain a concentrated alkaline solution. For example, the concentration step is executed by means of vacuum evaporation, reverse osmosis, simple crystallization or fraction crystallization.

Optionally, the method comprises a step of separation of the slag, in which the slag is removed from the alkaline solution. Advantageously, the step of separation of the slag is executed by means of filtration, for example by means of a paper filter, a plate press filter or a fossil flour filter under vacuum.

Advantageously the alkaline solution, in particular following the maceration step or at the secondary extraction step, has a pH greater than 11, preferably equal to or greater than 12.

In accordance with the preferred embodiment of the invention, the alkaline reagent Ra is totally constituted by the combustion ash or by the derivative of the combustion ash.

By means of the use of the combustion ash and their derivative, it was surprisingly found that such combustion discard of the biomass, both as is and under maceration, is extremely efficient as alkaline reagent for alkalizing the waste water to be treated and the very high pH is capable of structurally modifying the organic pollutant compounds, obtaining modified molecules MM which are more easily attackable by the anaerobic bacteria, as will be better described hereinbelow.

On such matter, various verification embodiments, described hereinbelow, were subjected to lab tests, obtained in accordance with different embodiments of the method, object of the invention, in particular by using a combustion ash from plant residual biomass of cassia and beech.

In accordance with such verification embodiments, a step of arranging the combustion ash was provided, by means of the recovery of plant ash of cassia and beech after combustion in classical residential stove.

In addition, the aforesaid combustion ash was advantageously subjected to a pulverization first in a mill and then in a mortar. The pulverized combustion ash was sieved and then subjected to a maceration step (first maceration) in an extracting aqueous liquid. Multiple verification embodiments were executed, combining the following parameters:
- maceration step executed under hot or cold conditions;
- dissolution of the combustion ash in water, from 20 to 40% by weight;
- maintenance in the maceration step for a leaching time equal to 24 h or to 48 h. Subsequently, exhaustion tests of the combustion ash were executed, in which the slag after the maceration step was immersed two consecutive times in a new extracting liquid in order to verify the quantity of alkaline solution obtainable from consecutive maceration steps (second and third maceration).

A verification embodiment was also executed in which the alkaline solution was subjected to a secondary extraction step, in which new combustion ash was added.

A verification embodiment was also executed in which the alkaline solution was subjected to a step of separation from the slag by means of filtration over paper.

A verification embodiment was also executed in which a step of concentration via evaporation of the extracting liquid from the alkaline solution was carried out.

The verification embodiments were then subjected to titration of the alkaline solution, by means of the difference from that in commercial use, 30% NaOH, in order to control the pH of the alkaline solution.

In addition, all the alkaline solutions of the verification embodiments were added as alkaline reagent in samples of industrial and urban waste water in order to execute hydrolysis tests and compare verification embodiments in which the alkaline solution is filtered and concentrated with verification embodiments in which also the slag is present in the alkaline solution.

In addition, further hydrolysis tests were executed by dispersing combustion ash as is (dried and pulverized and not subjected to a maceration step) in the industrial and city waste water samples. From such lab tests, it was observed that all the verification embodiments reach the pre-established object of raising the pH to the desired values and modifying the organic pollutant compounds C in a manner such to render them more easily attackable by the anaerobic bacteria. From the lab tests, it was also found that with the verification embodiments in which the alkaline solution is mixed with slag, there is greater success in the reduction of the pollutant charge expressed as COD, with respect to the verification embodiments in which the alkaline solution is filtered. Such improved output is advantageously ascribable to the presence of the slag that is not yet exhausted (which is still a mixture of salts that are non-solubilized, also due to the factor of the common ion) and which therefor is further solubilized. In addition, such improved output is also advantageously ascribable to the greater structuring and coadjuvant force in the formation of the hydrolyzed complexes, and which normally are still finely dispersed at colloidal level. Consequently, it is possible to assume that the non-exhausted slag (bottom body) dispersed in the aqueous solution, subjected to hydrolysis, can be more greatly exhausted, being completed with the formation of calcium and magnesium hydroxides, to the detriment of the insoluble salts such as the relative carbonates and bicarbonates.

Also the lab tests which only use the combustion ash, as is, as alkaline reagent Ra obtained optimal results in the alkalization of the waste water with the obtainment of modified molecules MM that can be more greatly attacked by the anaerobic bacteria.

Advantageously, it was found that the combustion ash can be added as alkaline reagent Ra to the waste water Vr in a concentration comprised between 2.5 and 6.5 g/l, preferably between 3 and 6 g/l, more preferably between 3.5 and 5.5 g/l, still more preferably between 4 and 5 g/l.

In accordance with the preferred embodiment of the method, object of the present invention, in the step of addition of the alkaline reagent Ra depending on the nature of the organic pollutant compound C, the molecules constituting the latter sustain structural modifications and/or they are divided into molecules with lower molecular weight.

For example, the organic pollutant compound C can react with the alkaline reagent Ra according to an alkaline hydrolysis reaction, in a manner such that, in the basic environment that has formed following the addition of the alkaline reagent Ra, the organic compound C is divided into multiple different molecules with shorter chain.

Alternatively or in combination, the organic pollutant compound C can react with the alkaline reagent Ra without modifying the length of the chain thereof, but by breaking the hydrogen bonds and/or salt bridges.

In accordance with a first embodiment, the organic pollutant compound C comprises proteins provided with an excess of basic amino acids (arginine, lysine, histidine) and such proteins - following the addition of the alkaline reagent Ra - reach their isoelectric point, i.e. a condition with zero polarization of the molecule. Such condition advantageously allows the aforesaid proteins to be thickened/joined together and generate a flocculation F in a subsequent maturation step that will be described more in detail hereinbelow.

In accordance with a second embodiment, the organic pollutant compound C comprises proteins provided with an excess of basic amino acids and the basic environment that is created following the addition of the alkaline reagent Ra denatures such proteins, modifying their secondary, tertiary or quaternary structure, giving rise to the modified molecules MM, without necessarily having to break their intramolecular bonds.

In accordance with a third embodiment, the organic pollutant compound C comprises cellulose and/or starches and the addition of the alkaline reagent Ra causes the denaturing of the aforesaid molecules and the breakage of the intramolecular bonds thereof, generating modified molecules MM with short chain, in particular simple sugars.

In accordance with a fourth embodiment, the organic pollutant compound C comprises cellular material (ribosomes, cellular nucleus composed of DNA) contained in a monocellular organism, for example bacteria, present in the waste water Vr and the alkaline reagent Ra causes the breakage of the cytoplastic membrane, rendering the organic pollutant compound C itself available in the alkaline waste water Va. Such organic pollutant compound C thus comprises molecules provided with intramolecular bonds and susceptible of being broken in basic environment, giving rise to the modified molecules MM.

Optionally, the waste water Vr also comprise heavy metals, such as for example chromium, and in the step of adding the alkaline reagent Ra the latter also reacts therewith, making them precipitate like hydroxides. Such hydroxides are advantageously seized within the flocculation F in a subsequent maturation step, described hereinbelow, and thus they can be easily separated from the alkaline waste water Va.

In addition, optionally, the waste water Vr comprise phosphorus compounds, generally dissociated in water and therefore comprising for example the phosphate ion PO₃⁴⁻. Such ion advantageously reacts with the alkaline reagent Ra, and forms a phosphorus salt, easily separable.

For example, with pH higher than 10, if the alkaline reagent Ra comprises calcium hydroxide, the phosphate reacts and gives rise to hydroxyapatite.

In addition, the method comprises a step of maturation of the alkaline waste water Va for a maturation time tm in which the modified molecules MM coagulate in order to obtain mature waste water Vm containing at least one flocculation F of the modified molecules MM.

Preferably, the maturation time tm is comprised between 1 minute and 3 hours, more preferably between 2 minutes and 2 hours, still more preferably between 3 minutes and 1 hour. In the particular case in which the alkaline reagent comprises the combustion ash or slag of the maceration step, the maturation time tm is comprised between 1 minute and 3 hours, more preferably between 30 minutes and 2 hours, still more preferably between 1 hour and 2 hours, in a manner such to ensure an improved solubilization of the alkalizing compound. During such maturation time tm it is preferable to stir the alkaline waste water Va so as to maximize the probability of collision between the modified molecules MM dispersed in the aforesaid alkaline waste water Va. In particular, the modified molecules MM form intermolecular bonds with each other, for example by means of polycondensation reactions, generating an insoluble flocculation F in the alkaline waste water Va.

Advantageously, the maturation step provides for the addition of at least one polyelectrolyte P to the alkaline waste water Va in order to accelerate the formation of the flocculation F.

In particular, the polyelectrolyte P is an organic polymer, preferably a polyacrylamide or derivatives thereof, and is preferably added at the start of the maturation time tm.

In addition, the method comprises a step of separation, by means of a separation unit, of the mature waste water Vm at least into clarified water Vc and sludge Vf. In particular, the sludge Vf mainly contain the flocculation F.

Of course, without departing from the protective scope of the invention, the separation step can also be executed simultaneously with the maturation step.

Advantageously, the method comprises a step of thickening the sludge Vf, in which at least one alkaline recovery liquid Vaq is removed from sludge Vf, by means of thickening, in order to obtain concentrated sludge Vfc.

In particular, the recovery liquid Vaq comprises water and at least one fraction of alkaline reagent Ra that is not reacted.

Preferably, the recovery liquid Vaq comprises a percentage of liquid (mainly water) comprised between 60 and 70% by volume with respect to the total volume of the liquid content of the sludge Vf, and the concentrated sludge Vfc preferably comprise a percentage of liquid comprised between 30 and 40% by volume with respect to the total volume of the liquid content of the sludge Vf.

Preferably, the recovery liquid Vaq also comprises a percentage of flocculation F comprised between 1 and 5% by volume with respect to the total volume of the solid content of the sludge Vf, and the concentrated sludge Vfc preferably comprises a percentage of flocculation F comprised between 95 and 99% by volume with respect to the total volume of the solid content of the sludge Vf.

Advantageously, the method comprises a step of recirculating the recovery liquid Vaq, in which the recovery liquid Vaq is introduced into the waste water Vr.

In this manner, as set forth above, it is advantageously possible to recover most of the unreacted alkaline reagent Ra, present in the recovery liquid Vaq.

Preferably, the ratio between the flow rate of recirculated recovery liquid Vaq and the flow rate of waste water Vr is comprised between 0.01 and 0.05.

In addition, the method comprises a step of neutralization of the clarified water Vc in which the pH of the clarified water Vc is decreased, by means of at least one first acid reagent Rac1, in order to obtain neutral clarified water Vcn.

Preferably, the first acid reagent Rac1 comprises, and preferably is constituted by, carbon dioxide in order to form carbonates by means of reaction with residues of alkaline reagent Ra and basic modified molecules MM.

Advantageously, the method comprises a step of digestion of the sludge Vf or of the concentrated sludge Vfc by means of an anaerobic digester, in order to produce at least one biogas Vg and a digestate D, in which the biogas Vg comprises at least one fraction of methane V_{CH₄} and a first fraction of carbon dioxide V_{1,CO₂}.

More in detail, the digestion step provides for employing anaerobic bacteria, advantageously placed within the anaerobic digester and maintained in an environment with controlled pH and temperature.

In particular, the concentrated sludge Vfc is introduced at a pH preferably comprised between 7.5 and 9 within the anaerobic digester, since the anaerobic bacteria present within the anaerobic digester require substantially neutral pH conditions, or close to neutral, in order to be able to metabolize the concentrated sludge Vfc.

For such purpose, in particular if the pH of the concentrated sludge Vfc and/or of the sludge Vf arriving from the clarification unit is excessively alkaline, such to compromise the bacterial activity of the methanogenic bacteria, the method advantageously comprises a step of partial neutralization, in which the pH of the sludge Vf or of the concentrated sludge Vfc is decreased by means of at least one second acid reagent Rac2. In particular, the partial neutralization step is respectively executed after the separation step or after the thickening step. For example, the second acid reagent Rac2 is equivalent to the first acid reagent Rac1. Advantageously, the second acid reagent Rac2 is carbon dioxide.

Advantageously, the pH of the concentrated sludge Vfc and/or of the sludge Vf is lowered during the digestion step by means of reaction with at least part of the first fraction of carbon dioxide V_{1,CO₂} produced in the anaerobic digester and present in the biogas Vg.

Advantageously, the digestion step comprises a first stage in which the anaerobic bacteria hydrolyze the concentrated sludge Vfc by acidifying the flocculation F contained in the latter and forming first by-products such as volatile fatty acids, ketones and alcohols. In addition, the digestion step comprises a second stage, in which the aforesaid volatile fatty acids of the first by-products are transformed by the anaerobic bacteria into second by-products such in particular acetic acid, formic acid, carbon dioxide and molecular hydrogen. In addition, advantageously, the digestion step comprises a third stage, during which the anaerobic bacteria, starting from the second by-products, produce methane, for example starting from the acetic acid or by reducing the carbon dioxide produced, employing the molecular hydrogen.

In order to execute all the aforesaid stages of the digestion step, it is advantageous to employ various types of anaerobic bacteria, in particular acidogenic bacteria, acetogenic bacteria and methanogenic bacteria, which advantageously intervene in the first, second and third stage of the digestion step.

Advantageously, the kinetics of the reactions of metabolization of the flocculation F by the anaerobic bacteria is quicker than the kinetics of anaerobic digestion in the conventional methods, since the flocculation F comprises modified molecules MM, in particular hydrolyzed and/or denatured, and not the organic pollutant compound C, which in order to be metabolized would require a greater digestion time. In other words, due to the strong initial alkalizing of the waste water Vr, the modified molecules MM obtained, which then formed the flocculation F present in the sludge Vf or in the concentrated sludge Vfc, are much more easily attackable by the anaerobic bacteria, accelerating the digestion step. Otherwise, the previously known methods were suitable for obtaining only the coagulation of the compounds in a solution with lower alkalinity, not suitable for obtaining great quantities of sludge Vf that is easily digestible by the anaerobic bacteria.

In this manner, one obtains a method for treating waste water Vr capable of reducing the time of treatment at least one organic pollutant compound C initially present in such waste water Vr. In addition, it is possible to reduce the residence time of the sludge Vf or of the concentrated sludge Vfc in the anaerobic digester and reduce the dimensions of the latter.

Preferably, the mass of the concentrated sludge Vfc converted to biogas Vg is comprised between 40 and 60%, and the remaining percentage is transformed into digestate D.

The fraction of methane V_{CH4} is preferably comprised between 50% and 70% by mass of the biogas Vg produced, and the first fraction of carbon dioxide V_{1,CO₂} is preferably comprised between 30% and 50% by mass. Of course, without departing from the protective scope of the invention, also other gases can be present in the biogas Vg.

Generally, the biogas Vg comprises impurities such as for example hydrogen sulfide, which if accumulated within the anaerobic digester would compromise the activity of the anaerobic bacteria or, if extracted together with the methane fraction V_{CH4} and with the first fraction of carbon dioxide V_{1,CO₂}, would be introduced into the atmosphere, contributing to environmental pollution.

In order to remedy this drawback, the digestion step comprises a fourth removal stage, in which oxidizing bacteria, in particular of the genus *Thiobacillus* or *Sulfolobus,* oxidize the hydrogen sulfide to elementary sulfur.

Alternatively, the elimination of the hydrogen sulfide can be executed in steps subsequent to the anaerobic digestion step and before the combustion of the methane fraction V_{CH₄}. Advantageously in addition, the method comprises a step of eliminating the digestate D, in which the exhausted digestate D, i.e. incapable of producing further biogas, is extracted from the anaerobic digester, dried and preferably sent to a disposal center, or alternatively it is burned so as to produce energy useful for the plant's self-sustaining energy.

Advantageously, the method also comprises a step of combustion, in particular in the cogenerator (comprising for example a thermal power station or a diesel/gas motor), of at least the methane fraction V_{CH4} of the biogas Vg in order to produce at least electrical energy and a combustion gas GC, comprising at least one second fraction of carbon dioxide V_{2,CO₂}, and, preferably, a fraction of water vapor V_{H₂O,V}.

Advantageously, at least the second fraction of carbon dioxide V_{2,CO₂}, and preferably the combustion gas GC, is added to the clarified water Vc as first acid reagent Rac1 of the neutralization step in order to decrease the pH thereof.

In addition, advantageously, the second fraction of carbon dioxide, and preferably the combustion gas GC, is added to the sludge Vf or to the concentrated sludge Vfc as second acid reagent Rac2 of the partial neutralization step, if provided for, in order to decrease the pH thereof.

Of course, without departing from the scope of the present invention, the second fraction of carbon dioxide V_{2,CO₂} separated from the combustion gas GC can advantageously be employed for other purposes (for example in the industry of production of carbonated drinks, upon suitable treatment).

Advantageously, in particular in the event in which the quantity of carbon dioxide is not sufficient for the neutralization or the partial neutralization, the steps of neutralization or of partial neutralization of the method can also provide for the addition respectively of a first and/or second acid reagent Rac1, Rac2 different from carbon dioxide, in particular a strong acid, for example sulfuric acid. In particular, such first and/or second acid reagent Rac1, Rac2, different from carbon dioxide, can be added in addition to the carbon dioxide itself or in substitution.

For example, in the neutralization or partial neutralization step of the method, following the addition of the second fraction of carbon dioxide V_{2,CO₂}, if the pH of the neutral clarified water Vcn and/or of the sludge Vf and/or of the concentrated sludge Vfc was still greater than a respective threshold value of pH, provision is made for adding a predefined quantity of strong acid, in order to accelerate the lowering of pH.

Optionally, the method comprises a step of purification of the biogas Vg, not illustrated in figure 1, in order to remove pollutants (e.g. ammonia) from the latter. In particular, the aforesaid cleaning stage is advantageously executed before the step of combustion of the methane fraction V_{CH4} of the biogas Vg.

In this manner, one avoids introducing the pollutants of the biogas Vg within the clarified water Vc to be neutralized, or burning such pollutants together with the fraction of methane V_{CH4}, freeing the latter into the atmosphere in the form for example of nitrogen oxides or chlorinated compounds (e.g. dioxins).

Advantageously, the purification step provides for treating the biogas Vg through contact of at least part of the clarified water Vc, for example by means of gurgling through the aforesaid clarified water Vc or passage through a washing tower in counter-current with respect to the clarified water Vc itself. It was in fact surprisingly discovered that the treatment of the biogas Vg with the clarified water Vc allows removing the main pollutants (e.g. hydrogen sulfide, ammonia, carbon dioxide, siloxanes and volatile organic compounds) in an effective and inexpensive manner, by means of chemical absorption, i.e. via reaction of the latter with the clarified water Vc. In addition, the clarified water Vc used in the purification step is then advantageously treated with the above-described neutralization step.

Alternatively, the purification step can provide for the passage of the biogas Vg into a condensation column in order to remove the water vapor and a subsequent acidic washing in order to remove at least the ammonia. In addition, the purification step can provide for a basic washing in order to possibly remove the hydrogen sulfide and other acidic compounds contained in the biogas Vg.

In accordance with the preferred embodiment of the present invention, the waste water Vr, and consequently the clarified water Vc, comprise ammonia. Therefore, advantageously, before the neutralization step, the method also comprises a step of insufflation of a gaseous current G into the clarified water Vc in order to extract at least one fraction of the ammonia from the clarified water Vc, obtaining a gaseous mixture MG comprising at least the ammonia fraction, and a step of reaction of the ammonia fraction in the gaseous mixture MG with an acidic aqueous solution, preferably a solution of nitric acid or sulfuric acid, in order to obtain at least one ammonium salt. In this manner it is possible to avoid the oxidation of the ammonia dissolved in water, first to nitrites and nitrates and then to nitrogen, which could occur for example with a subsequent process of aerobic digestion, and simultaneously produce one or more ammonium salts, for example ammonium nitrate, employable in the fertilizer industry.

According to a preferred embodiment of the present invention, the method comprises a step of cleaning the neutral clarified water Vcn by means of an aerobic treatment.

During such step, the neutral clarified water Vcn are treated with aerobic bacteria, preferably in an aerobic reactor, and such aerobic bacteria metabolize possible residues of the organic pollutant compound C, of modified molecules MM, of flocculation F and/or of possible other undesired residual compounds to be eliminated. In particular, the aerobic bacteria produce biomass, which is sedimented on the bottom of the aerobic reactor.

Advantageously, in addition, the method comprises a step of cleaning the neutral clarified water Vcn by means of a chemical-physical treatment selected from among double exchange reaction, filtration, disinfection, sedimentation.

In particular, the chemical-physical treatment is intended to eliminate the residual pollutants and the aerobic bacteria remaining in the neutral clarified water Vcn following the aerobic treatment. Of course, without departing from the protective scope of the present invention, the step of cleaning the neutral clarified water Vcn can also comprise only between the aerobic and chemical-physical treatments.

The method, object of the present invention, advantageously allows reducing the concentration of the organic pollutant compound C below the desired limits, independent of the initial concentration of the organic pollutant compound C.

Preferably, the concentration of the organic pollutant compound C exiting from the plant is lower than 160 mg/l, and still more preferably lower than 100 mg/l in COD.

Indeed, depending on the type of waste water to be treated, more or less sludge Vf will be obtained, depending on the concentration of the organic pollutant compound C, and, consequently, a quantity of biogas Vg will be obtained that is higher or lower depending on the mass of sludge Vf produced.

The invention thus conceived therefore achieves the pre-established objects.

## Claims

1. Method for treating waste water, which comprises the following operating steps:
- providing waste water (Vr) to be treated, said waste water (Vr) comprising at least one organic pollutant compound (C);
- addition of an alkaline reagent (Ra) in said waste water (Vr) in order to obtain alkaline waste water (Va), said at least one organic pollutant compound (C) being transformed into modified molecules (MM) due to said alkaline reagent (Ra);
- maturation of said alkaline waste water (Va) for a maturation time (tm) in which said modified molecules (MM) coagulate in order to obtain mature waste water (Vm) containing at least one flocculation (F) of said modified molecules (MM);
- separation, by means of a separation unit, of said mature waste water (Vm) at least into clarified water (Vc) and sludge (Vf), which sludge (Vf) mainly contains said flocculation (F);
- neutralization of said clarified water (Vc), in which the pH of said clarified water (Vc) is decreased by means of at least one first acid reagent (Rac1) in order to obtain neutral clarified water (Vcn);
said method being **characterized in that** said alkaline reagent (Ra) comprises combustion ash from biomass combustion and/or a derivative of said combustion ash,
in which said combustion ash and/or the derivative of said combustion ash contain at least one alkalizing compound.

2. Method for treating waste water according to claim 1, **characterized in that** it comprises the following operating steps:
- providing a biomass,
- combustion of said biomass in order to produce at least thermal and/or electrical energy and said combustion ash;
in which the alkalizing compound in said combustion ash is at least one oxide containing an alkaline or alkaline earth metal selected from among: potassium (K₂O), sodium (Na₂O), calcium (CaO) and magnesium (MgO).

3. Method for treating waste water according to claim 2, **characterized in that** said oxide containing an alkaline or alkaline earth metal is present in said combustion ash in a quantity greater than 30% by mass with respect to the mass of dry substance of said combustion ash, preferably in a quantity greater than 35%.

4. Method for treating waste water according to any one of the preceding claims, **characterized in that** it comprises a maceration step, in which said combustion ash is immersed in an extracting liquid and maintained in said extracting liquid for a pre-established leaching time in order to extract said alkalizing compound from said combustion ash and obtain an alkaline solution, containing at least part of alkalizing compound in solution, and a slag, containing combustion ash at least partially lacking said alkalizing compound;
in which the derivative of said combustion ash comprises at least one part of said alkaline solution.

5. Method for treating waste water according to claim 2 or 3 and claim 4, **characterized in that** in said maceration step said at least one oxide containing an alkaline or alkaline earth metal is transferred into said extracting liquid, obtaining said alkaline solution.

6. Method for treating waste water according to claims 4 or 5, **characterized in that** said alkalizing compound is present in said alkaline solution in a quantity comprised between 20 and 50% by mass with respect to the mass of the alkaline solution.

7. Method for treating waste water according to any one of the claims from 4 to 6, **characterized in that** it comprises a concentration step, in which a part of extracting liquid is removed from said alkaline solution in order to obtain a concentrated alkaline solution.

8. Method for treating waste water according to any one of the claims from 4 to 7, **characterized in that** said maceration step is executed within a reactor under controlled atmosphere, substantially free of carbon dioxide.

9. Method for treating waste water according to any one of the claims from 4 to 8, **characterized in that** said alkaline solution has a pH higher than 11, preferably equal to or higher than 12.

10. Method for treating waste water according to any one of the preceding claims, **characterized in that** said alkaline reagent (Ra) is totally constituted by said combustion ash or by the derivative of said combustion ash.

11. Method for treating waste water according to any one of the preceding claims, **characterized in that** the pH of said alkaline waste water (Va) is comprised between 10 and 14, preferably between 11 and 14.

12. Method for treating waste water according to any one of the preceding claims, **characterized in that** said modified molecules (MM) are hydrolyzed and/or denatured molecules.
